# EUROPEAN PATENT APPLICATION

(11) **EP 2 048 882 A1**
(43) Date of publication of application: **15.04.2009**
(21) Application number: 07791145.1
(22) Date of filing: 23.07.2007
(51) Int. Cl.: H04N 7/173, H04N 5/44, H04N 5/445, H04L 12/44

(54) **DISPLAY APPARATUS**

(30) Priority: 28.07.2006 JP 2006206125; 28.07.2006 JP 2006206138
(71) Applicant: Sharp Kabushiki Kaisha, Osaka-shi, Osaka 545-8522 (JP)
(72) Inventor: SUZUKI, Takayuki, Mie 513-0809 (JP); OHNUMA, Atsushi, Tochigi 329-2141 (JP); TANAKA, Toshiyuki, Mie 519-0156 (JP)
(74) Representative: Brown, Kenneth Richard
(86) International application number: PCT/JP2007/064412
(87) International publication number: WO 2008/013132

(57) **Abstract**

A display apparatus capable of visualizing and presenting connection status and setting information of each device existing in an HDMI network and easily switching input devices is provided. This display apparatus comprises a device search control means connected with a plurality of external devices through an HDMI cable based on the HDMI standard for defining the presence of the external devices and physical addresses in response to search demands of physical address defining a positional relation between the plurality of external devices and the display apparatus, and a device connection status presenting means for determining the connection status of the devices from the presence of the decided external device and the physical address to display in a tree structure, whereby a user can easily recognize the connection status between the display apparatus and the external devices. Further it comprises a device selection means for receiving the selection of the external device to input to the display apparatus from the external devices displayed by the device connection status presenting means, and a device switch means for switching the outputs from the external devices received by the device selection means to the input of the display apparatus, whereby the connections can be easily switched.

## Description

### TECHNICAL FIELD

The present invention relates to an HDMI/CEC (High-Definition Multimedia Interface/Consumer Electronics Control) compatible display apparatus.

### BACKGROUND OF THE INVENTION

Conventionally, when a plurality of AV (Audio Visual) devices (for example, video and audio devices, a game machine, a DVD (Digital Versatile Disc) recorder, and the like) and a display apparatus (for example, a television receiver and the like) are connected and input and output of audio signal and video signal from each of the AV devices are switched to reproduce or record video, connection between each of the AV devices is reconnected directly.
However, as the number of AV devices to be connected increases, the switch of connection is complicated and many connection errors occur.

In order to solve the problem, the Patent Document 1 provides an AV system composed of a display apparatus connected through a digital interface with a plurality of AV devices, for example, a television receiver, wherein connection status in flow of video signal and/or audio signal from each of the connected AV devices is displayed on a screen and setting can be changed from the screen properly.
Thereby, regardless of physical connection status of the plurality of AV devices and the display apparatus, it is made possible to visually understand connection status in flow of video signal and/or audio signal easily.

Furthermore, the Patent Document 2 provides a home bus system through which various kinds of devices (including a television) are connected with an IEEE serial bus, wherein an image indicating connection status of all devices on a serial bus when viewed from a television that is presently viewed by a user is displayed on the television, for example, by displaying an image which shows that the television presently viewed by the user is arranged at a first stage, a device directly connected with the television is arranged at a second stage without discriminating a main-sub relation, and similarly a device directly connected with the device at the stage is arranged at the next stage without discriminating a main-sub relation for third and subsequent stages.
As a result, in the bus system where various kinds of devices are connected through the serial bus, connection relation can be displayed so that connection relation between the presently used display apparatus and other devices can be easily understood.

According to the above-mentioned conventional technology, connection status between a plurality of devices can be easily grasped, however, the statuses of connected devices are not displayed.
In order to solve the problem, in the Patent Document 3, connection of a television and a VTR is detected through communication on a digital control signal line so that EPG data decoded by an EPG decoder of the television as well as characters and images showing that the VTR has been connected are displayed on an EPG screen of a display portion.
This makes it possible to select a broadcast program received by a tuner of the television and a program reproduced by the VTR or to perform recording reservation by the VTR while viewing the EPG screen.

By the way, in recent years, as the digital interface standard for next-generation televisions, the HDMI (High-Definition Multimedia Interface) standard has been established (refer to Non-Patent Document 1). The HDMI is arranged for AV devices by adding an audio transmission function, a copyright protection function, and a color difference transmission function to a DVI (Digital Visual Interface). Conventionally, a plurality of cables for each signal of video/audio/control have been used to connect between devices, however, the HDMI needs only one HDMI cable, thus there is an advantage that troublesome wiring of AV devices can be simplified.

Furthermore, TMDS (Transition Minimized Differential Signaling) is employed in a physical layer, HDCP (High-bandwidth Digital Contents Protection) is employed an illegal action prevention function, EDID (Extended Display Identification Data) is employed for an authentication between devices, and CEC (Consumer Electronics Control) is employed for control system connection in the entire system. With the CEC, for example, control signal is relayed from the television to AV devices such as an STB (Set-Top Box) and a DVD player connected through the HDMI so that the entire AV system can be operated with one remote controller.

Among them, the CEC is described in Supplement 1 of the HDMI standards, where description is given for recommended functions applicable to the CEC, definitions of electric characteristics, signal and bit timing, header/data block and the like, rules for communication between devices, and the like.
Patent Document 1: Japanese Laid-Open Patent Publication No. 9-154077
Patent Document 2: Japanese Laid-Open Patent Publication No. 2000-244836
Patent Document 3: Japanese Laid-Open Patent Publication No. 10-150611
Non-Patent Document 1:"High-Definition Multimedia Interface Specification Version1.3" by Hitachi, Ltd et al., [online], June 22 2006, HDMI Licensing, LLC [search conducted in June 29 2006], Internet URL <http://www.hdmi.org/manufacturers/download.asp>

### DISCLOSURE OF THE INVENTION

### PROBLEMS TO BE SOLVED BY THE INVENTION

Conventionally, information of connection relation between devices (to which device each device is connected) needs to be all managed by a user, and, for example, it is possible to switch setting in individual devices (a recorder, an AV amplifier) connected with a television, however, it has been very difficult for the user to visually understand connection status of devices on a network.

Against this, the above-mentioned Patent Documents 1 and 2 provide the configuration where many various kinds of AV devices are connected through a digital interface based on the IEEE 1394 standard.
Among them, in the Patent Document 1, regardless of physical connection status, each AV device is arranged and displayed so that flow of image data and audio data is easily understood, however, connection status of all AV devices connected with the IEEE 1394 network and setting information of individual AV devices are not displayed.
Furthermore, in the Patent Document 2, connection status of all AV devices connected with the IEEE 1394 network are displayed in a tree structure, however, setting information of individual AV devices is not displayed.
Furthermore, in the Patent Document 3, although a list of devices connected on the IEEE 1394 network can be obtained, connection information between these devices is not visually displayed, further, input to a television can not be switched to a certain device based on the connection status of the devices.

As described above, in the Patent Documents 1, 2, and 3, the HDMI is not used, and in the HDMI network, any means for efficiently searching/managing AV devices existing in an HDMI CEC network and for presenting connection status and setting information of each AV device to a user is not established.

The present invention has been made in view of above-mentioned circumstances, and an object is to provide a display apparatus for efficiently searching/managing AV devices existing in an HDMI CEC network, presenting connection status and setting information of each AV device to a user, and easily switching input devices.

### MEANS FOR SOLVING THE PROBLEMS

In order to solve the above-mentioned problem, a display apparatus of the present invention is configured as follows.
A display apparatus of the present invention is connected with a plurality of external devices through an HDMI cable based on the HDMI standard, and comprises a device search control means for deciding, the presence of the external devices and the physical address by a physical address request for searching a physical address to define a positional relation between the plurality of external devices and the display apparatus; and a device connection status presenting means for determining and displaying connection status of the devices from the presence of the external devices and the physical address which have been decided by the device search control means.

The device search control means transmits physical address requests at any one of the following timing or at an optional combination thereof.
(1) At a time of power supply, physical address requests are given to all logical addresses to determine connection status of each of the logical addresses by the device connection status determination means.
(2) When a specific trigger occurs in a side of the display apparatus, physical address requests are given to all logical addresses to determine connection status of each of the logical addresses by the device connection status determination means.
(3) At a specific time, physical address requests are given to all or any logical addresses to determine connection status of each of the logical addresses by the device connection status determination means.
(4) When a CEC command is received from an external device whose physical address is unknown, a physical address request is executed to the device (logical address).

The device connection status determination means determines the following connection status.
(1) When no response is given from a transmission device of the physical address request, the transmission device is determined to be in connection released status.
(2) When a response is given from the transmission device of the physical address request but the physical address is not returned, the transmission device is determined to be in connection status.
(3) When the physical address is returned from the transmission device of the physical address request, the transmission device is determined to be in complete connection status.

Furthermore, the display apparatus of the present invention comprises a device selection means for receiving selection of an external device to input to the display apparatus out of the external devices displayed by the device connection status presenting means; and a device switch means for switching the output from the external device received by the device selection means to the input to the display apparatus.

The device connection status presenting means arranges the display apparatus at a first layer, arranges an external device directly connected to the display apparatus at a second layer, and similarly arranges an external device directly connected to an external device arranged at a certain layer at a next layer for a third and subsequent layers, so that connection status of devices connected with an HDMI network is visually displayed.

Furthermore, using a CEC (Consumer Electronics Control) command or a CEC vendor command, input signal selection and output signal selection of external devices that are not directly connected to the display apparatus and are connected to the second and subsequent layers are switched to be displayed on the display apparatus.

Furthermore, the device connection status presenting means places a first cursor position where connection status of the external devices is shown on a presently selected input device, and when displaying connection status of external devices, displaying all or a part of a device name, a logical address, a physical address, a name of an input/output terminal, status of the external devices, setting information of the external devices at the same time or displaying with different colors for each type of the external devices, alternatively, and when a cursor is placed on a displayed external device, displaying all or a part of a device name, a logical address, a physical address, a name of an input/output terminal, status of the external devices, setting information of the external devices by popping up.

The part or all of a device name, a logical address, a physical address, a name of an input/output terminal, status of the external devices, setting information of the external devices, and a type of the external devices are obtained using a CEC (Consumer Electronics Control) command or a CEC vendor command.

Furthermore, as each means of the display apparatus with the above-mentioned structure, a program to function a computer is created, or the program is recorded in a computer readable recording medium, and the above-mentioned problem can be also solved by executing the program on the computer provided in the display apparatus.

### EFFECT OF THE INVENTION

According to the present invention, the following effect can be attained.
(a) By utilizing communication result through CEC, it is possible to provide a user with a visualized device connection status. In addition, status of individual devices (presence of a disc in the case of a player, remaining HD capacity in the case of a recorder, and the like) and setting information of individual devices are displayed at the same time, thus making it possible for a user to easily recognize device connection status, and status and setting information of devices.
(b) It is possible for the user to select a desired device using a cursor for each of the connected devices on the visualized display and to switch the input to the display apparatus to the device.

Furthermore, the following effect can be expected in the internal processing.
(c) Since <Give Physical Address> is transmitted instead of <Polling Message>, the processing for performing a physical address request again after transmitting <Polling Message> is reduced and the processing time is decreased.
(d) Since various triggers to start a search are provided, it is possible to maintain connection status of devices with high accuracy.

### BRIEF DESCRIPTION OF THE DRAWINGS

Fig. 1 is an example of a display system using a display apparatus according to an embodiment of the present invention;
Fig. 2 is a block diagram showing the structure of the display apparatus to which the present invention is applied;
Fig. 3 is a block diagram showing the functional structure of the display apparatus according to an embodiment;
Fig. 4 is an example of the data structure of a device connection status storage portion;
Fig. 5 is a definition table of logical addresses;
Fig. 6 is a flowchart illustrating the processing in a device connection status determination portion;
Fig. 7 is an example of displaying the connection status of external devices in the display system of Fig. 1 using a tree structure;
Fig. 8 is a display example when a cursor is placed on an external device which has been viewed on the display apparatus until now;
Fig. 9 is a display example when a cursor is moved to select an external device targeted for viewing on the display apparatus;
Fig. 10 is a flowchart illustrating the processing for switching an external device to be input to the display apparatus using the display of device connection status;
Fig. 11 is an example of a display screen of a CEC device list;
Fig. 12 is an example of a display screen of status and setting information of the selected device; and
Fig. 13 is an example of a confirmation display screen for switching an input device to the display apparatus.

### EXPLANATIONS OF REFERENCE NUMERALS

11...display apparatus, 12...antenna, 13...input terminal, 14...television signal processing portion, 14a...tuner portion, 14b...signal processing portion 15...selection portion, 17...external device, 18...CEC transmission bus, 19...HDMI connector, 20...HDMI signal processing portion, 21...video processing portion, 22...audio processing portion, 23...control portion, 24...operation portion, 25...remote controller, 26...receiving portion, 27...storage portion, 28...signal generation portion, 29...synthesizing portion, 30...display, 40...speaker, 50...device search control portion, 51...device connection status determination portion, 52...device connection status storage portion, 60...device connection status presenting portion, 61...device switching portion.

### PREFERRED EMBODIMENTS OF THE INVENTION

The preferred embodiments according to a display apparatus of the present invention will hereinafter be described with reference to the drawings.

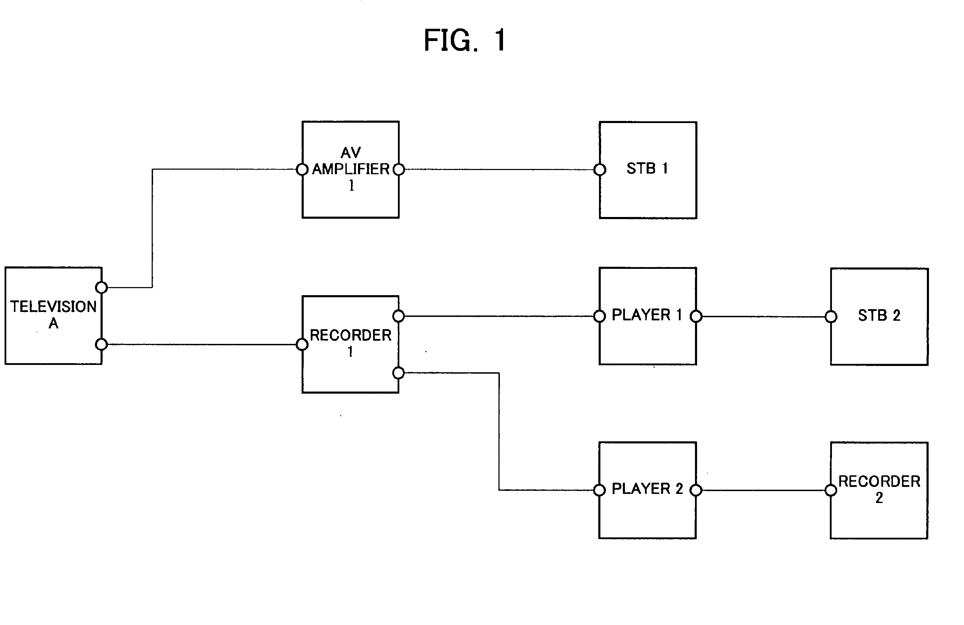

Fig. 1 is an example of a display system using a display apparatus according to the present embodiment. In the display system, a display apparatus and a plurality of external devices are connected through an HDMI cable based on the HDMI standard.
For example, the display apparatus includes a television receiver, and the external devices include devices such as an AV amplifier, an STB (Set Top Box), a player, and a recorder, and all of which have an HDMI connector based on the HDMI standard (refer to Non-Patent Document 1).

In Fig. 1, there are two branches from the display apparatus (television), and one of the branches is connected with an AV amplifier 1 and further with an STB 1.
Another branch from the display apparatus is connected with a recorder 1.
There are two branches from the recorder 1, and one of the branches is connected with a player 1 and further with an STB 2. Another branch from the recorder 1 is connected with a player 2 and further with a recorder.

Further, when an external device is a player, digital video signal and digital audio signal supplied from the external device are received through the HDMI cable by the display apparatus. Furthermore, when an external device is a recorder, digital video signal and digital audio signal supplied from the display apparatus are received through the HDMI cable by a desired external device and recorded in a recording medium or the like.
Moreover, with the HDMI cable, not only digital video signal and digital audio signal but also control signal by a CEC protocol are transmitted/received. In addition, the display apparatus and each external device are normally in a stand-by mode, and even when there is a device to which the electric power is not supplied on the way, it is possible to transmit the signals to a device ahead.

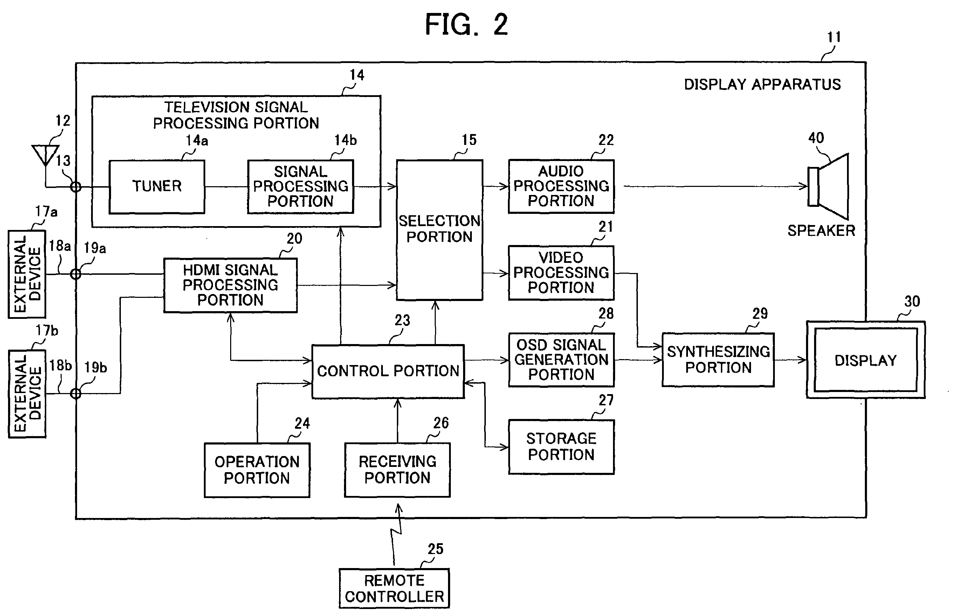

Fig. 2 is a block diagram showing the structure of a display apparatus 11 to which the present invention is applied. The display apparatus 11 has a function of receiving television broadcast signal and a function of transmitting/receiving digital signal based on the HDMI standard and control signal.

That is, the television broadcast signal is received by an antenna 12 and supplied through an input terminal 13 to a television signal processing portion 14. The television signal processing portion 14 obtains signal of a predetermined channel from the input television broadcast signal by a tuner portion 14a and restores video signal and audio signal by a signal processing portion 14b, then each signal is decoded and output to a selection portion 15.

Moreover, digital signal supplied from an external device 17 through a CEC transmission bus 18 based on the HDMI standard are received by an HDMI connector 19 and supplied to an HDMI signal processing portion 20. The HDMI signal processing portion 20 restores video signal and audio signal from the input digital signal based on the HDMI standard to output to the selection portion 15, and outputs a control signal to a control portion 23.

Moreover, the control signal from the control portion 23 to the external device 17 is supplied to the HDMI signal processing portion 20. The HDMI signal processing portion 20 outputs the supplied control signal to the external device 17 through the HDMI connector 19 and the CEC transmission bus 18. Here, it is assumed that, through the CEC transmission bus 18, the control signal is transmitted/received based on the above-mentioned CEC protocol. In this way, a network for connecting the display apparatus and external devices with the HDMI cable based on the HDMI standard to control each of the external devices using the CEC protocol will hereinafter be referred to as an HDMI network.

In addition, when reception of television broadcast signal is selected, the control portion 23 controls the television signal processing portion 14 and besides controls the selection portion 15 to select video signal and audio signal output from the television signal processing portion 14. Moreover, when reception of digital signal based on the HDMI standard is selected, the control portion 23 performs operation setting of the HDMI signal processing portion 20 and besides controls the selection portion 15 to select video signal and audio signal output from the HDMI signal processing portion 20.

The selection portion 15 selectively switches and output the video signal and audio signal output from the television signal processing portion 14 and the video signal and audio signal output from the HDMI signal processing portion 20 depending on the control from the control portion 23 and supplys the video signal to a video processing portion 21 and the audio signal to an audio processing portion 22.
Then, the video signal processed at the video processing portion 21 and OSD signal generated at an OSD (On Screen Display) signal generation portion 28 are supplied to a synthesizing portion 29, and the synthesizing portion 29 superimposes the video signal and the OSD signal to supply to a display 30 and supplies the audio signal processed at the audio processing portion 22 to a speaker 40, and video and audio are reproduced.

The control portion 23 controls most parts of operations of the display apparatus 11, including above-mentioned various kinds of transmitting/receiving operations. The control portion 23 is composed of a micro processor incorporating a CPU (Central Processing Unit) and the like, and, using a storage portion 27, receives operation information from an operation portion 24 or receives operation information sent from a remote controller 25 through a receiving portion 26, and controls each portion so that the operation content can be reflected on it.
The storage portion 27 primarily includes a read only memory in which a control program executed by the CPU of the control portion 23 is stored, a readable/writable memory for providing the CPU with a work area, and a nonvolatile memory in which various kinds of setting information, control information and the like are stored.

The remote controller 25 is primarily provided with a power supply key, a broadcast channel direct selection key, a quick key, channel up/down keys, a cross key, a determination key, a program guide key, an end key, a return key, color keys (blue, red, green, yellow), a volume control key, an menu key, as well as, a direct to recorder key (recording/reproduction) and a connection selecting key (record list, media switch, surround, HDMI device switch, device list display and the like), and when each key is pressed, information of the pressed key is sent to the receiving portion 26 as operation information.

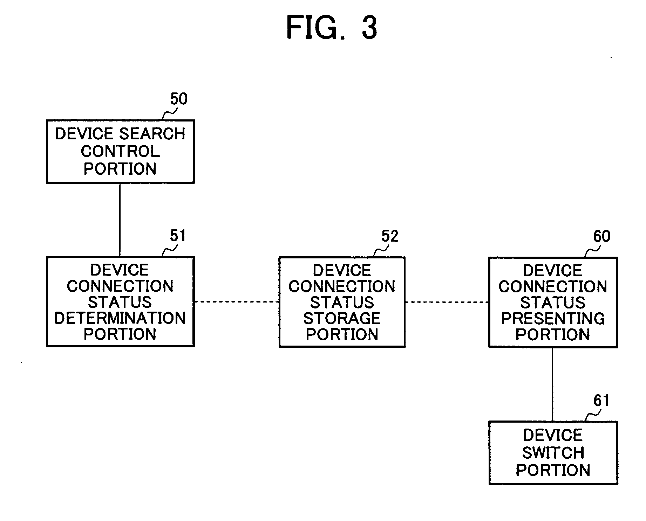

Next, Fig. 3 is a block diagram showing the functional structure of the display apparatus according to the present embodiment. In the figure, the display apparatus includes, in addition to general functions of a television receiving apparatus, a device search control portion 50, a device connection status determination portion 51, a device connection status storage portion 52, a device connection status presenting portion 60, and a device switch portion 61.

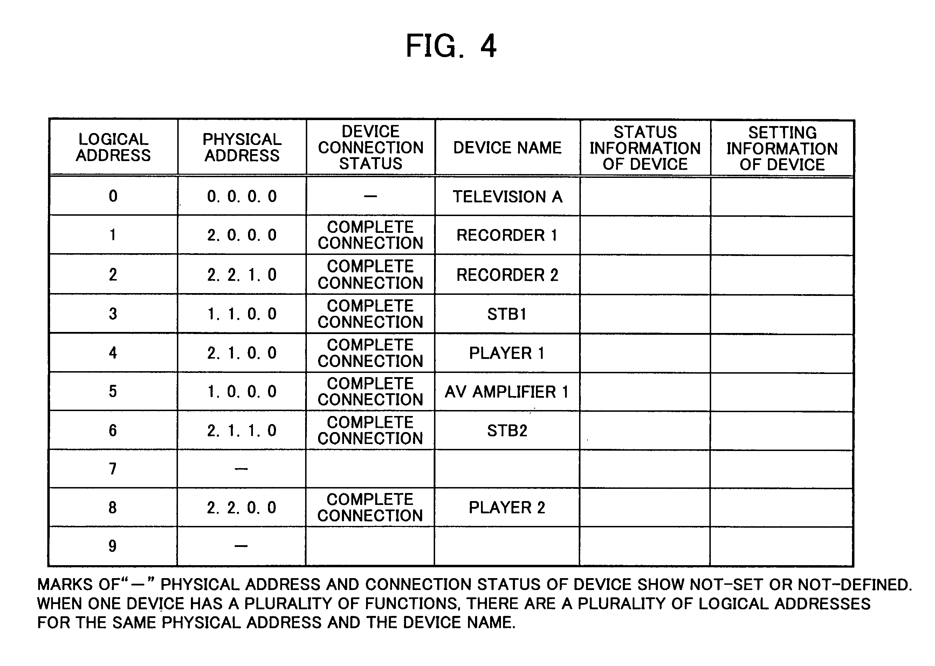

The device search control portion 50 obtains connection status of external devices on the HDMI network to which the display apparatus is connected and status and setting information of each of the external devices, and causes the device connection status storage portion 52 to store and manage the values thereof.
First, the content stored and managed by the device connection status storage portion 52 will be described. As illustrated in Fig. 4, the device connection status storage portion 52 stores the following data items for each logical address of external devices.

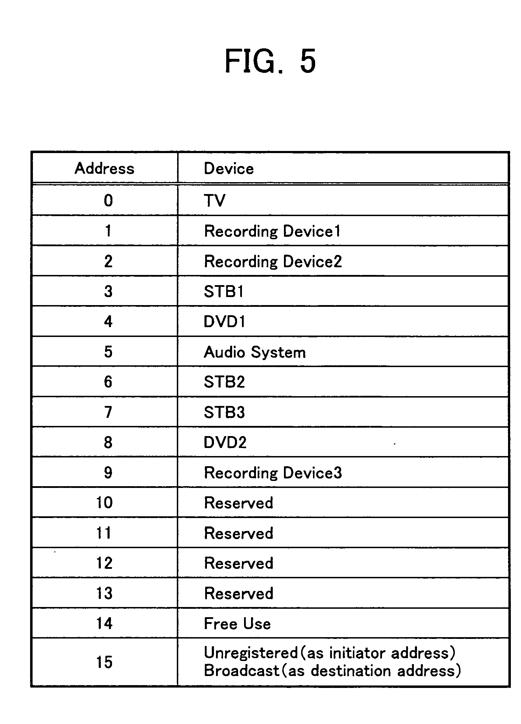

Logical Address: 0 to 15 can be treated in the present version of the HDMI CEC standard as shown in Fig. 5, and there is no same address name in the HDMI network. Here, as a logical address, currently effective 0 to 9 are treated.
Moreover, making use of the fact that logical addresses are different depending on types of external devices, when displaying connection status, for example, colors are changed to differentiate the display so that types of the external devices can be recognized. For example, in Fig. 1, a logical address of each external device is shown as the following table.

**[Table 1]**

| Device Name | Logical Address |
|---|---|
| Television A | 0 |
| AV amplifier 1 | 5 |
| STB 1 | 3 |
| Recorder 1 | 1 |
| Player 1 | 4 |
| STB 2 | 6 |
| Player 2 | 8 |
| Recorder 2 | 2 |

Physical Address: There is no same address name of the physical address in the HDMI network, but adjustment is automatically made when external devices are added to or separated from the HDMI network. The physical address has five-layer address, and is composed of a sole number n in the same layer and expressed in n.n.n.n form. A layer of an external device directly connected with the display apparatus is a first layer, a layer of an external device connected with the device in the first layer is a second layer, and the layer number is increased as it is separated from the display apparatus. In addition, it is expressed so that the layer number is increased as moving from n in the left end of the above-mentioned n.n.n.n form to the right.

For example, the display apparatus is a route device and has a physical address of 0.0.0.0. When two external devices are directly connected with the display apparatus, a physical address of the first external device is expressed as 1.0.0.0, and a physical address of the second external device is expressed as 2.0.0.0. In addition, when three external devices are connected with the second external device, each of physical addresses is expressed as 2.1.0.0, 2.2.0.0, 2.3.0.0. Subsequently, it is expressed similarly and physical addresses of the respective external devices shown in Fig. 1 are presented as follows.

**[Table 2]**

| Device Name | Physical Address |
|---|---|
| Television A | 0.0.0.0 |
| AV amplifier 1 | 1.0.0.0 |
| STB 1 | 1.1.0.0 |
| Recorder 1 | 2.0.0.0 |
| Player 1 | 2.1.0.0 |
| STB 2 | 2.1.1.0 |
| Player 2 | 2.2.0.0 |
| Recorder 2 | 2.2.1.0 |

Device Connection Status: Connection status between devices is classified into (following) three status (connection status, complete connection status and connection released status) to hold any status among them.
Device Name, Status Information, Setting Information: When each external device detects a point of time when each external device is connected to the HDMI network, these pieces of information are obtained from each of the external devices by a CEC command (message) or a vendor command to be held. All or a part of these items may be obtained.
Here, for example, the status information indicates the presence/absence of a disc when the external device is a player and indicates the status of a device such as remaining HD capacity in the case of a recorder, and the setting information indicates, for example, information of a characteristic parameter and the like in reproducing video or audio when a device is a player.

The device search control portion 50 transmits a physical address request to a device on the HDMI network at an appropriate timing as follows to obtain connection status between the display apparatus and the external device.

### (1) The above operations are executed at start-up of the display apparatus.

It is detected that the display apparatus is turned on, and physical address requests are transmitted to all physical addresses (1 through 9), and then the device connection status determination portion 51 determines the connection status between the display apparatus and external devices. The determination result is set in the device connection status storage portion 52 corresponding to the respective logical addresses.

### (2) The above operations are executed when a specific trigger in the display apparatus side occurs.

When a user presses, for example, the "search start" button or the like provided in the operation portion 24 or the remote controller 25, a device search request is explicitly generated and physical address requests are transmitted to all of the logical addresses (1 through 9), and then the device connection status determination portion 51 determines the connection status between the display apparatus and the external devices. The determination result is set in the device connection status storage portion 52 corresponding to the respective logical addresses.

### (3) The above operations are executed periodically.

A specific time is previously set, and a device search request is generated at the specific time and physical address requests are transmitted to all of the logical addresses (1 through 9), and then the device connection determination portion 51 determines the connection status between the display apparatus and external devices. The determination result is set in the device connection status storage portion 52 corresponding to the respective logical addresses. Here, one or a plurality of specific time may be effective.

### (4) Upon reception of a CEC command from an external device whose physical address is unknown, a physical address request is executed to the device (logical address).

When a user presses, for example, a "connection status display" button or the like provided in the operation portion 24 or the remote controller 25, a device search request is implicitly generated and a physical address request is transmitted to a logical address of an external device whose physical address is unknown, and then the device connection determination portion 51 determines the connection status between the display apparatus and the external device. The determination result is updated to the device connection status storage portion 52 corresponding to the logical address.
Alternatively, when an external device is connected to the HDMI network and a broadcast message sent from the external device is received, a physical address request is transmitted to a logical address attached to the message and the device connection determination portion 51 determines the connection status between the display apparatus and the external device. The determination result is updated to the device connection status storage portion 52 corresponding to the logical address.

In this way, since <Give Physical Address> is transmitted instead of <Polling Message>, the processing for performing a physical address request again after transmitting <Polling Message> is reduced and the processing time is decreased.
Furthermore, since various triggers to start a search are provided as described above, it is possible to maintain connection status of devices with high accuracy.

Next, processing in the device connection determination portion 51 will be described.
When being activated from the device search control portion 50, the device connection determination portion 51 transmits a physical address request of <Give Physical Address> to a specified logical address through the HDMI network and determines a connection status of an external device to which the physical address request has been transmitted and updates the device connection status storage portion 52 based on the result of the determination. Moreover, when the external device is in a complete connection status, the status and setting information of the external device are obtained from the external device to update the device connection status storage portion 52.

Here, the connection statuses of an external device refer to the following three statuses.
(1) Connection status: This statues is referred to as a case where a logical address is decided and a physical address is not decided. For example, when a CEC command is received from a device whose physical address is unknown, the logical address is referred to as the connection status.
(2) Complete connection status: This status is referred to as a case where both of a logical address and a physical address are decided.
(3) Connection release status: This status means a status of a logical address which is No Ack at the time of transmitting a CEC command from a display apparatus to an external device.

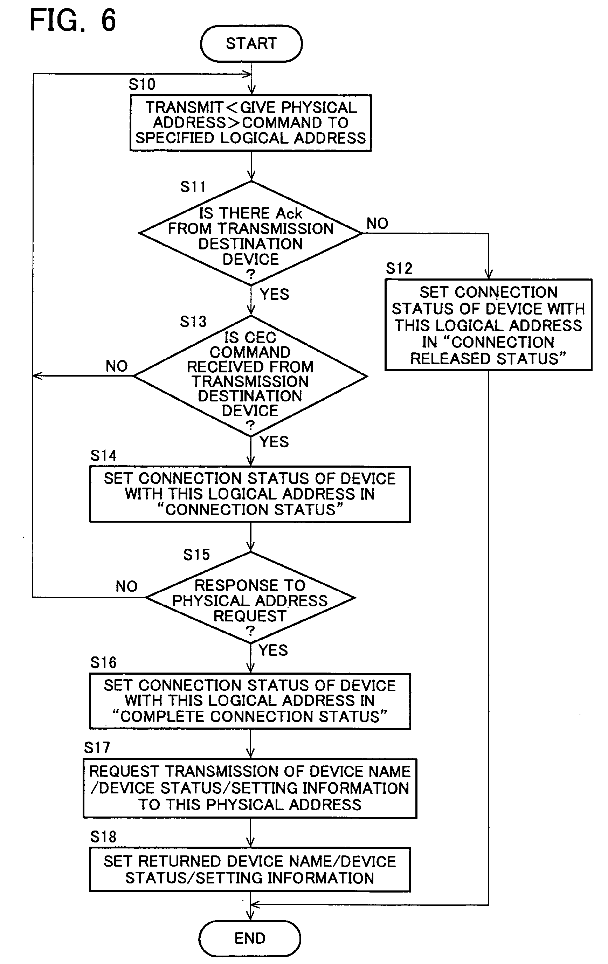

The processing of the device connection determination portion 51 will be described with reference to the flowchart of Fig.6.
First, a physical address request of <Give Physical Address> is transmitted to a specified logical address through the HDMI network (step S10).
When the received data from a transmission destination device is Ack (step S11/YES), processing flow goes to step S13.
Alternatively, when the received data of Ack is not given from the transmission destination device within a predetermined time (step S11/NO), a physical address of the specified logical address of the device connection status storage portion 52 is set in "undefined" and a device connection status is set in "connection release status" (step S12) and the processing is ended.

When no CEC command is received from the transmission device (step S13/NO), the processing flow goes back to step S10 to transmit a physical address request again.
Alternatively, when a CEC command is received from the transmission device (step S13/YES), the device connection status of the specified logical address of the device connection status storage portion 52 is set in "connection status" (step S14).

Next, when the received data is not a physical address reply <Report Physical Address> from the transmission destination device (step S15/NO), the processing flow goes back to step S10 to transmit a physical address request again.
Alternatively, when the received data is a physical address reply from the transmission destination device (step S15/YES), the device connection status of the specified logical address of the device connection status storage portion 52 is set in "complete connection status" (step S16).

Next, a vendor request for requesting all or a part of "device name, device status, and device setting information" is transmitted to the device having the logical address/physical address (step S17).
When a response is given to the vendor request, each of returned device name, device status, and device setting information is set in the device name, device status, and device setting information of the device connection status storage portion 52 corresponding to the logical address (step S18), and the processing is ended.

By utilizing such a physical address request, it is possible to know an existence of a specific logical address in a network and a physical address thereof at the same time, and it is possible to determine a possibility of control of connected devices depending on a control content by internally defining more detailed connection status as connection status of external devices.

A "connection status display" button or the like is provided in the operation portion 24 or the remote controller 25, and when a user presses the button, the device connection status presenting portion 60 visualizes the connection status between the display apparatus and external devices using a physical address, a logical address and the like stored in the device connection status storage portion 52 to display on the display 30.

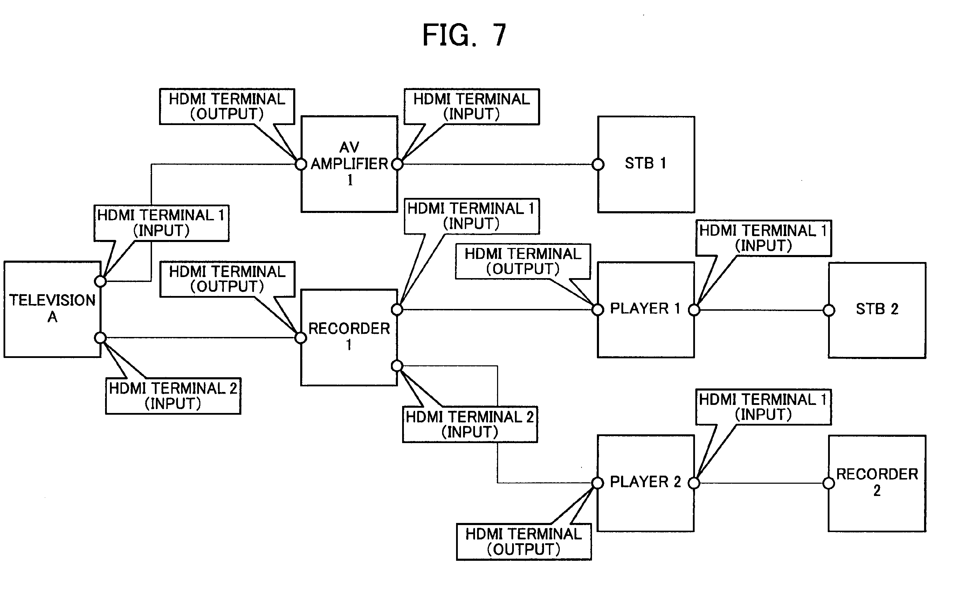

The connection status of external devices is expressed as one external device for the external device having the same device name and the same physical address, and in the case of the display system of Fig. 1, it is displayed in a tree structure as illustrated in Fig. 7, that is, the connection status of external devices is displayed in the tree structure by repeating the processing of arranging all external devices connected with the external devices arranged in a certain layer in a subsequent layer, such that the display apparatus is arranged on the left end and all external devices connected with the display apparatus are arranged in a second layer, and further, all external devices connected with these external devices in the second layer are arranged in a third layer, respectively, and all external devices connected with these external devices in the third layer are arranged in a fourth layer, respectively.
Note that, not only on the far left, the display apparatus may be certainly arranged on the far right, top or bottom.

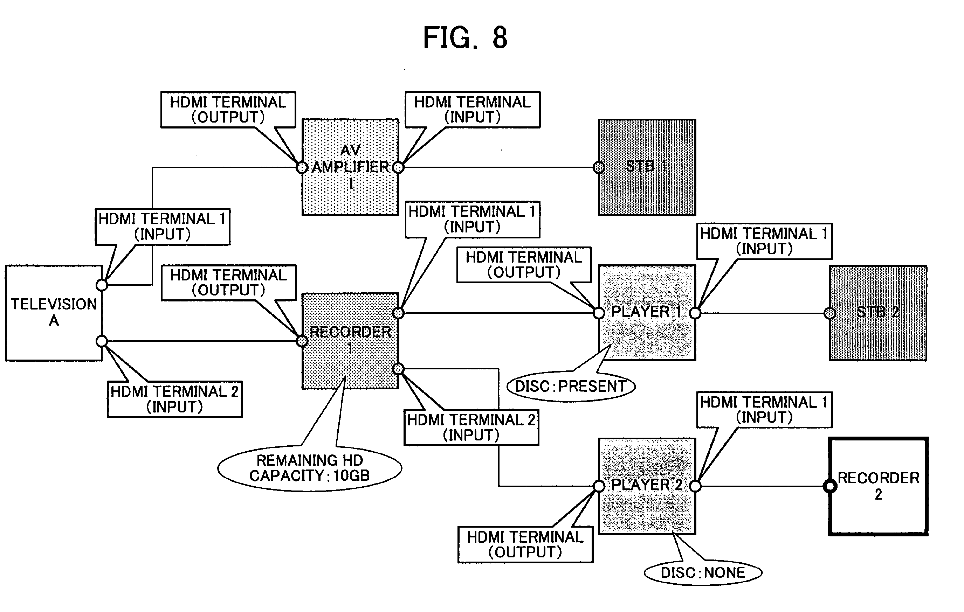

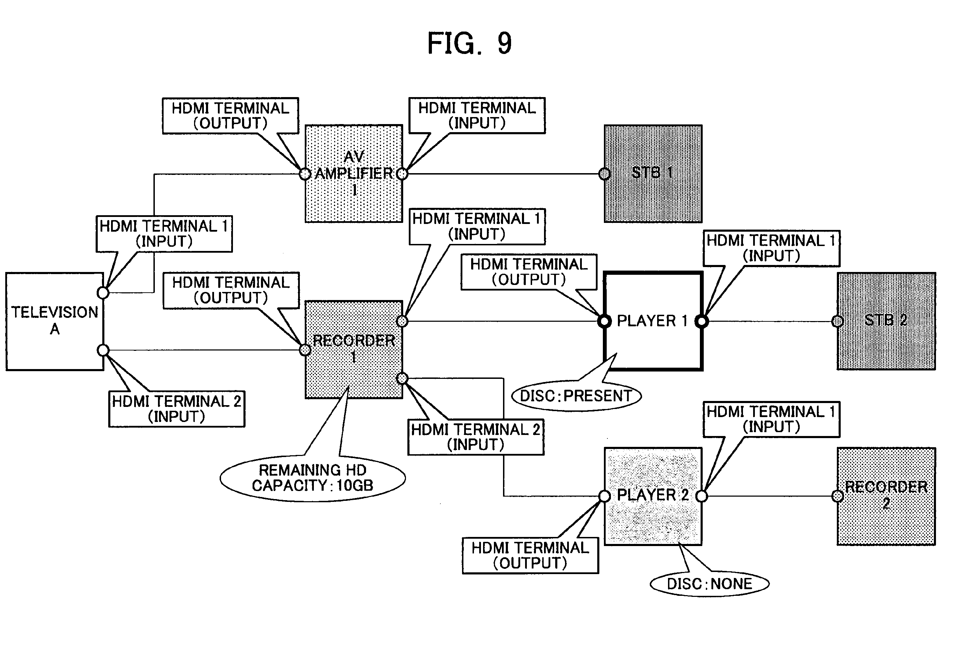

In the display of each external device in the above-mentioned tree structure, all or a part of a name of the external device, a physical address, a logical address, a name of an input/output terminal, status of each external device (presence/absence of a disc in a player, remaining capacity in a recorder and the like) and setting information of each external device may be simultaneously displayed (Figs. 7 and 8). Moreover, colors of rectangles showing each external device may be changed depending on types of the external devices or a rectangular frame of an external device on which a cursor is positioned may be differentiated from rectangular frames of other external devices (change color, thick frame etc.)
In addition, a position of a cursor is firstly placed on an external device which has been viewed on the display apparatus until now ("recorder 2" in Fig. 8) and is moved according to the operations of the cross key by a user ("player 1" in Fig. 9).

In the above-mentioned display of the connection status, only the display may be displayed on a screen, or the display may overlap the video under viewing so that the video can be viewable through the display, or the display may be displayed on a divided screen.
Moreover, when there is no area where status and setting information of each external device are displayed, all or a part of a name, a physical address, a logical address, and a name of an input/output terminal with respect to the external device on which the cursor is positioned, the status of each external device (presence of a disc in a player, remaining capacity in a recorder, and the like) and setting information of each external device may be displayed by popping up.

In this way, by utilizing communication result through the CEC, it is possible to obtain connection statuses of devices, thus the visualized device connection status may be provided to a user.
In addition to this, it is possible to display the statuses of individual devices (presence of a disc in the case of a player, remaining HD capacity in the case of a recorder, and the like) and setting information of individual devices at the same time.

Furthermore, in the device connection status presenting portioned 60, the external device where the cursor is positioned when the determination key is pressed is selected to activate the device switch portion 61 so that input to the display apparatus is switched to the selected external device.

The device switch portion 61 determines a possibility of control for connected devices based on the connection status of the external device specified by the device connection status presenting portion 60, referring to the device connection status storage portion 52, so that the output to the selected external device is changed to the input to the display apparatus.
That is, in the case of CEC control in no need of a physical address, an external device in a connection status or in a complete connection status is able to be controlled, alternatively, in the case of CEC control in need of a physical address, only a device in a complete connection status is able to be controlled, and the output to the selected external device is switched to the input to the display apparatus using CEC control.

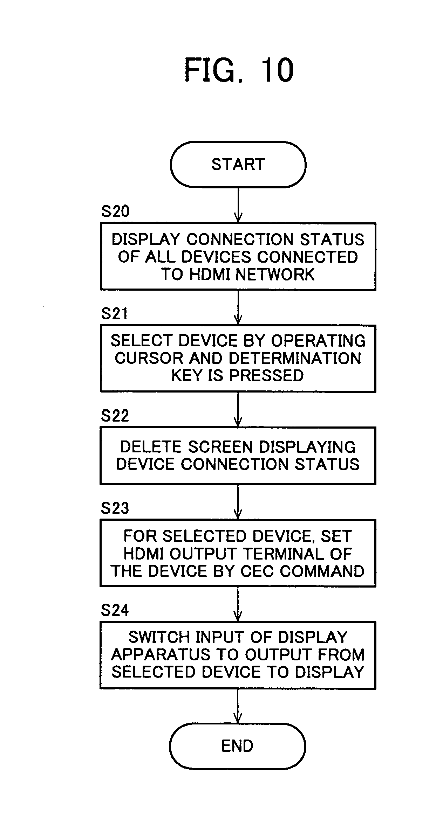

Fig. 10 is a flowchart illustrating the processing for switching an external device to input to the display apparatus using a display of device connection status. Here, description will be given taking a case where in the display system of Fig. 1, a user views signals from the recorder 2 on the display apparatus (television A) at present and then desires to view signals from the player 1 on the display apparatus (television A), as an example.

When a user presses the "connection status display" button on the operation portion 24 or the remote controller 25, information of the operation is analyzed at the control portion 23 to active the device connection status presenting portion 60.
The device connection status presenting portion 60 visualizes the connection status between the display apparatus and external devices using physical addresses and logical addresses stored in the device connection status storage portion 52 to display on the display 30 (step S20).

The connection status is displayed in a tree structure as shown in Fig. 8, and all or a part of a name, a physical address, a logical address, and a name of an input/output terminal of the external device, a status of each external device (presence/absence of a disc in a player, remaining capacity of a recorder, and the like) and setting information of each external device are simultaneously displayed in rectangular frames showing the display apparatus and each external device. In addition, colors of rectangles showing respective external devices are changed and displayed depending on types of the external devices. Moreover, a rectangular frame of a current input device (the recorder 2 in Fig. 8) on which a cursor is positioned may be differentiated from rectangular frames of other external devices (change color, thick frame etc.)
Furthermore, all or a part of a name, a physical address, a logical address, and a name of an input/output terminal of the external device, a status of each external device, and setting information of each external device in the above may be displayed on a pop-up with respect to only the external device to which the cursor is moved.

Since the connection statuses of devices are visually displayed in a tree structure as described above, a user moves the cursor using the cross key to an external device to be desired as a next input device and then presses the determination key.
The device connection status presenting portion 60 detects that the user has pressed the determination key, and determines that the external device ("player 1" in Fig. 9) where the cursor is placed at this time is selected to activate the device switch portion 61 (step S21).
The device switch portion 61 deletes the screen on which the connection status of devices is displayed (step S22), and causes the selected external device ("player 1" in Fig. 9) to set HDMI output to the device as the HDMI terminal (HDMI terminal 2) of the display apparatus using a CEC command and returns the control to the control portion 23 (step S23).
Subsequently, the control portion 23 inputs the input signal from the external device through the HDMI terminal (HDMI terminal 2) and causes the display 30 to display the input signal (step S24).

In this way, a user is able to easily recognize connection statuses of devices, statuses of devices and setting information of devices, which are visually provided, and therefore, it is possible for the user to select a desired external device using a cursor for each of connected devices on the visualized display and to switch the input to the display apparatus into the external device easily.

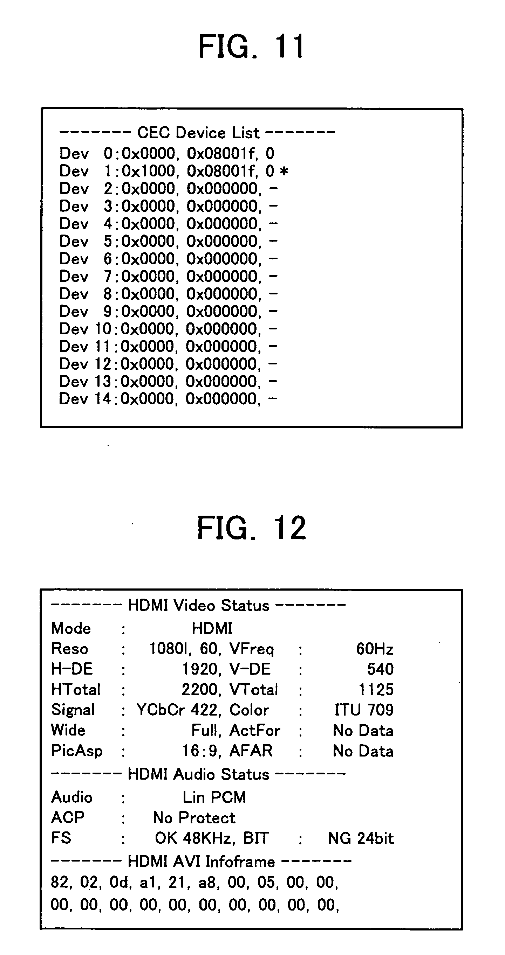

Next, another example of display of the device connection status presenting portion 60 and the device switch portion 61 will be described.
When a user presses the "connection status display" button on the remote controller 25, the device connection status presenting portion 60 displays a CEC device list in which a logical address, a physical address device vendor ID, and connection status and routing information are corresponded to each other as illustrated in Fig. 11.
When the user selects the desired device from the above-mentioned CEC device list using the cross key (vertical arrow key) on the remote controller 25, the status and setting information of the selected device as illustrated in Fig. 12 are displayed. When the user confirms the displayed content and presses the return key on the remote controller 25, the display returns to an original selection screen of a CEC device list.

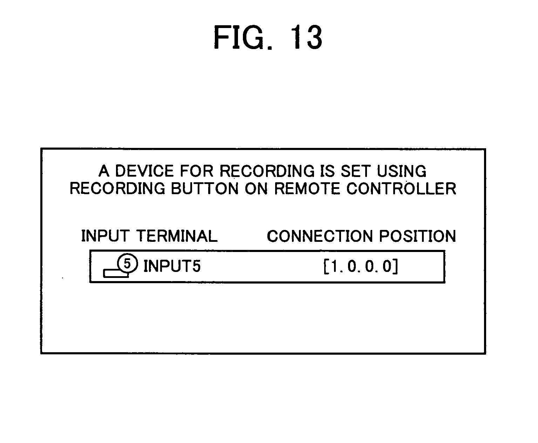

After finishing confirmation, when the user presses the determination key on the remote controller 25, a switch confirmation screen of input signal to the display apparatus as illustrated in Fig. 13 is displayed.
Here, when the user presses the determination key on the remote controller 25 again, the device switch portion 61 changes the output to the selected external device to the input to the display apparatus.

Note that, the present invention will not be limited to above described embodiments and many modifications and alterations can certainly be made to the above described embodiments within the scope of the present invention.

Note that, the embodiments of the present invention are also realized by computer-programming each function of the above-mentioned display apparatus and executing the computer program installed on the display apparatus. Furthermore, the computer program can be easily transferred and executed by recording the computer program in a detachable recording medium, or downloading through a network.

## Claims

1. A display apparatus connected with a plurality of external devices through an HDMI cable based on the HDMI standard, comprising:
a device search control means for deciding, the presence of the external devices and the physical address; by a physical address request for searching a physical address to define a positional relation between the plurality of external devices and the display apparatus, and
a device connection status presenting means for determining and displaying connection status of the devices from the presence of the external devices and the physical address which have been decided by the device search control means.

2. The display apparatus as defined in Claim 1, wherein
the device search control means gives physical address requests to all or a selective logical address at a time of power supply, upon a specific trigger, or at a predetermined time.

3. The display apparatus as defined in Claim 1 or 2,
wherein
when receiving a CEC command from an external device whose physical address is unknown, the device search control means gives a physical address request to the external device.

4. The display apparatus as defined in Claim 1, 2, or 3 wherein the device search control means includes a device connection status determination means, and
when no response is given from a transmission device of the physical address request, the device connection status determination means determines that the transmission device is in connection released status, when a response is given from the transmission device of the physical address but the physical address request is not returned, the transmission device is determined as in connection status, and when the physical address is returned from the transmission device of the physical address request, the transmission device is determined to be in complete connection status.

5. The display apparatus as defined in any one of Claims 1 through 4, further comprising:
a device selection means for receiving selection of an external device to input to the display apparatus out of the external devices displayed by the device connection status presenting means; and
a device switch means for switching the output from the external device received by the device selection means to the input to the display apparatus.

6. The display apparatus as defined in Claim 5, wherein
the device connection status presenting means arranges the display apparatus at a first layer, arranges an external device directly connected to the display apparatus at a second layer, and similarly arranges an external device directly connected to an external device arranged at a certain layer at a next layer for a third and subsequent layers, so that connection status of devices connected with an HDMI network is visually displayed.

7. The display apparatus as defined in Claim 5 or 6,
wherein
using a CEC (Consumer Electronics Control) command or a CEC vendor command, input signal selection and output signal selection of external devices that are not directly connected to the display apparatus and are connected to the second and subsequent layers are switched to be displayed on the display apparatus.

8. The display apparatus as defined in any one of Claims 5 through 7, wherein
the device connection status presenting means displays each type of the external devices in different colors.

9. The display apparatus as defined in any one of Claims 5 through 8, wherein
when displaying connection status of external devices, the device connection status presenting means displays all or a part of a device name, a logical address, a physical address, a name of an input/output terminal, status of the external devices, and setting information of the external devices simultaneously.

10. The display apparatus as defined in any one of Claims 5 through 8, wherein
when a cursor is placed on a displayed external device, the device connection status presenting means displays all or a part of a device name, a logical address, a physical address, a name of an input/output terminal, status of the external devices, setting information of the external devices by popping up.

11. The display apparatus as defined in any one of Claims 5 through 10, wherein
the device connection status presenting means places a first cursor position where connection status of the external devices is shown on a presently selected input device.

12. The display apparatus as defined in any one of Claims 5 through 11, wherein
a part or all of a device name, a logical address, a physical address, a name of an input/output terminal, status of the external devices, setting information of the external devices, and types of the external devices are obtained using a CEC (Consumer Electronics Control) command or a CEC vendor command.
